# EUROPÄISCHE PATENTSCHRIFT

(11) **EP 1 809 899 B1**
(45) Veröffentlichungstag und Bekanntmachung des Hinweises auf die Patenterteilung: **12.12.2012**
(21) Anmeldenummer: 05795339.0
(22) Anmeldetag: 21.10.2005
(51) Int. Cl.: F03D 7/04, F03D 7/02

(54) **WINDENERGIEANLAGE UND VERFAHREN ZUR AUTOMATISCHEN KORREKTUR VON WINDFAHNENFEHLEINSTELLUNGEN**
WIND TURBINE AND METHOD FOR THE AUTOMATIC CORRECTION OF WIND VANE SETTINGS
EOLIENNE ET PROCEDE POUR CORRIGER AUTOMATIQUEMENT DES MAUVAIS REGLAGES DE PALE DIRECTRICE

(30) Priorität: 25.10.2004 DE 102004051843
(43) Veröffentlichungstag der Anmeldung: 25.07.2007
(73) Patentinhaber: REpower Systems SE, 22297 Hamburg (DE)
(72) Erfinder: ALTEMARK, Jens, 24768 Rendsburg (DE)
(74) Vertreter: Glawe, Delfs, Moll
(86) Internationale Anmeldenummer: PCT/EP2005/011352
(87) Internationale Veröffentlichungsnummer: WO 2006/045556

(56) Entgegenhaltungen:
- EP-A- 0 083 819
- DE-A1- 19 739 162
- DE-A1- 19 934 415
- US-A- 4 695 736
- US-A1- 2003 127 862
- US-A1- 2004 197 186
- FARRET F A ET AL: "Sensorless active yaw control for wind turbines" IECON'01. PROCEEDINGS OF THE 27TH. ANNUAL CONFERENCE OF THE IEEE INDUSTRIAL ELECTRONICS SOCIETY. DENVER, CO, NOV. 29 - DEC. 2, 2001, ANNUAL CONFERENCE OF THE IEEE INDUSTRIAL ELECTRONICS SOCIETY, NEW YORK, NY : IEEE, US, Bd. VOL. 1 OF 3. CONF. 27, 29. November 2001 (2001-11-29), Seiten 1370-1375, XP010572977 ISBN: 0-7803-7108-9

## Beschreibung

Die Erfindung betrifft eine Windenergieanlage mit einem Unterbau, einem darauf angeordneten Maschinenhaus, das mittels einer Schwenkeinrichtung azimutverstellbar ist, einen Rotor, der drehbar an einer Stirnseite des Maschinenhauses angeordnet ist und einen Generator zur Erzeugung elektrischer Energie antreibt, und einer Steuerung für die Schwenkeinrichtung, an die Messeinrichtungen zur Messung von Windparametern und einer elektromechanischen Quantität angeschlossen sind.

Heutige Windenergieanlagen sind mit Rotoren versehen, die zu dem Wind ausgerichtet werden müssen. Abhängig von der Konstruktion des Rotors muss er so ausgerichtet sein, dass er entlang der Rotorachse gesehen in den Wind zeigt (Luvläufer) oder von ihm weg zeigt (Leeläufer). Um den Rotor in eine richtige Azimutposition relativ zum herrschenden Wind drehen zu können, ist an der Windenergieanlage üblicherweise ein Nachführregler mit einer Windfahne vorgesehen. Sie bestimmt die Richtung des einfallenden Winds und wirkt so mit einer Schwenkeinrichtung zusammen, dass der Rotor in die richtige Azimutposition verschwenkt wird. Die Windfahne ist meistens auf einem Maschinenhaus an einer Stelle hinter dem Rotor angebracht. Sie befindet sich damit in einem Bereich, der von Verwirbelungen durch den Rotor betroffen ist. Dadurch kommt es zu Fehlmessungen.

Aus offenkundiger Vorbenutzung ist es bekannt, die sich aus der Anordnung der Windfahne hinter dem Rotor ergebenden Abweichungen zu bestimmen und als Korrekturwert zu berücksichtigen. Dazu muss bei der Inbetriebnahme eine Kalibrierung vorgenommen werden. Ein Nachteil dieser Methode liegt darin, dass der so ermittelte Kalibrierwert nur für einen Rotorblatttyp und strenggenommen auch nur für die Windstärke zutreffend ist, bei der die Kalibrierung durchgeführt wurde. Außerdem liegt ein weiterer Nachteil darin, dass die erreichbare Genauigkeit selbst bei Verwendung von hochwertigen Lasermessverfahren nicht besonders hoch ist. Üblicherweise wird nur eine Genauigkeit von 2° erreicht. Eine solche Genauigkeit schien hinnehmbar, da der Wirkungsgrad der Windenergieanlage sich nur mit dem Kosinus der Fehlstellung ändert. Abweichungen von bis zu 5° wurden vor diesem Hintergrund als tolerabel angesehen. Man erkannte aber, dass mit diesem Ansatz zu kurz gegriffen wurde. Denn es kommen noch weitere Fehler auf Grund von unvermeidbaren Fehlstellungen zum Wind hinzu. Weitere Ursachen für Fehlstellungen liegen insbesondere in folgendem:

Häufige oder schnelle Änderungen der Windrichtung, da die Schwenkeinrichtung nicht unentwegt dem Wind hinterher fahren kann. Es käme sonst leicht zu einer Überlastung und vorzeitigem Ausfall des Mechanismus. Eine weitere Ursache liegt in einer Verzerrung der Luftströmung im Bereich der Windfahne durch den sich drehenden Rotor. Diese Verzerrung ist abhängig von der Windstärke, der Windrichtung und in der Regel nur schwer vorhersagbar. Weiter entstehen Ungenauigkeiten durch mögliche Einflüsse benachbarter Windenergieanlagen. Diese sind insbesondere dann ausgeprägt, wenn entlang der Windrichtung die Windenergieanlagen den in Linie angeordnet sind. Alle diese Umstände führen zu einer deterministischen oder stochastischen Fehlstellung der Windfahne. Die sich daraus ergebenden Fehler sind durch einen einfachen Nachführregler für die Azimutverstellung nicht vollständig ausgleichbar. Insgesamt ergeben sich durch die Fehlstellung spürbare Einbußen.

Um diesen Einbußen entgegenzuwirken, sind Optimierungsstrategien entwickelt worden. Aus der DE-A-199 34 415 ist es bekannt, eine Verbesserung der einfachen Nachführregelung dadurch zu erreichen, dass mehrere Leistungskurven in Abhängigkeit von den Windgeschwindigkeiten für die Leistungsabgabe bei unterschiedlichen Stellungen des Rotors zum Wind vorgesehen sind. Mittels dieser Leistungskurven wird zur Kalibrierung der Nachführregelung ein Optimum mittels an sich bekannter Optimierungsrechnungen ermittelt. Die Leistungskurven müssen für unterschiedliche Anströmwinkel bei Inbetriebnahme der Anlage bestimmt und gespeichert werden; es ist auch möglich, die Leistungskurven im Betrieb adaptiv zu verändern. Ein Nachteil dieser Technik ist es, dass die Messung verschiedener Leistungskurven für unterschiedliche Anströmbedingungen aufwendig ist.

Der Erfindung liegt die Aufgabe zugrunde, ausgehend von dem zuletzt genannten Stand der Technik eine Windenergieanlage und ein Verfahren zum Ausrichten der Windenergieanlage zu schaffen, das mit weniger Aufwand eine genauere Ausrichtung auch bei schwierigen Verhältnissen ermöglicht.

Die erfindungsgemäße Lösung liegt in den Merkmalen der unabhängigen Ansprüche. Vorteilhafte Weiterbildungen sind Gegenstand der abhängigen Ansprüche.

Erfindungsgemäß ist bei einer Windenergieanlage mit einem Unterbau, einem darauf angeordneten Maschinenhaus, das mittels einer Schwenkeinrichtung azimutverstellbar ist, einem Rotor, der drehbar an einer Stirnseite des Maschinenhauses angeordnet ist und einen Generator zur Erzeugung elektrischer Energie antreibt, Messeinrichtungen zur Messung von Windgeschwindigkeit, -richtung sowie für eine elektromechanische Quantität und einer Steuerung für die Schwenkeinrichtung vorgesehen, dass ein Kalibriermodul für die Steuerung vorgesehen ist, das ein Effizienzmaßglied und eine Auswerteeinrichtung umfasst, wobei das Effizienzmaßglied zum Berechnen eines Effizienzmaßes für die Erzeugung der elektromechanischen Quantität über der Windgeschwindigkeit ausgebildet ist, wobei das Effizienzmaß ein Indikator dafür ist, wie viel die Windenergieanlage bei den gegebenen Windbedingungen tatsächlich erzeugt, und wobei die Auswerteeinrichtung einen Klassifikator mit einem ersten Ausgang für eine erste Klasse mit positiver Windrichtung und einen zweiten Ausgang für eine zweite Klasse mit negativer Windrichtung aufweist, an die ein erstes Berechnungsglied zum Bestimmen eines ersten Mittelwerts aus den Effizienzmaßen der ersten Klasse und ein zweites Berechnungsglied zum Bestimmen eines zweiten Mittelwerts aus den Effizienzmaßen der zweiten Klasse angeschlossen sind, und ein Komparatorglied aufweist, das zum Bestimmen einer Differenz von den Mittelwerten der ersten und zweiten Klassen und Ausgeben eines Kalibrierwerts entsprechend der Differenz an die Steuerung der Schwenkeinrichtung ausgebildet ist.

Die Erfindung erreicht damit eine Verringerung der Fehlstellung des Rotors in Bezug auf die Windrichtung, und zwar unabhängig von den herrschenden Windbedingungen. Der Kern der Erfindung liegt in dem Gedanken, ein gesondertes Kalibriermodul vorzusehen, das auf die Steuerung für die Schwenkeinrichtung einwirkt. Mittels des Kalibiermoduls wird geprüft, ob das Maschinenhaus tatsächlich durch die Steuerung korrekt in den Wind ausgerichtet worden ist. Es das nicht der Fall, so wird ein Korrekturwert an die Steuerung ausgegeben, auf dessen Grundlage die Steuerung die weitere Ausrichtung des Maschinenhauses durchführt. Fehler, wie sie durch eine ungenaue Montage der Windfahne (stationäre Fehler) entstehen, werden auf diese Weise ausgeglichen. Aber auch andere Arten der Fehlpositionierungen können ausgeglichen werden, bspw. durch ungünstige Anströmungsbedingungen der Windfahne verursachte (dynamische Fehler), wie sie bspw. durch Ablenkung der Luftströmung im Lee des Rotors entstehen können (Korkenziehereffekt). Weiter ermöglicht es die Erfindung, eine optimale Ausrichtung des Rotors auch dann zu erreichen, wenn über die gesamte Rotorfläche gesehen keine homogenen Windbedingungen herrschen. Auch bei einer noch so genau messenden Windfahne allein kann damit keine optimale Ausrichtung des Rotors erreicht werden. Dank des erfindungsgemäßen Kalibriermoduls, das die tatsächlich auf den Rotor einwirkenden Verhältnisse berücksichtigt, wird auch unter solch erschwerten Bedingungen eine optimale Ausrichtung ermöglicht.

Ein wesentlicher Aspekt beruht darauf, mit einem spezialisierten Glied ein Effizienzmaß zu bilden. Das Effizienzmaß ist ein Indikator dafür, wie viel die Windenergieanlage bei den gegebenen Windbedingungen tatsächlich erzeugt, also wie gut sie den Wind ausnutzt. Dank des Effizienzmaßes ist die Steuerung unabhängig von Einflüssen, die durch Änderungen der Windgeschwindigkeit hervorgerufen werden. Als Quantität des Effizienzmaßes können verschiedene physikalische Größen herangezogen werden. Häufig wird dies die elektrische Leistung sein. Es ist aber auch möglich, die erzeugte elektrische Energie heranzuziehen. Das hat den Vorteil, dass bei einer Messung über eine gewisse Zeitdauer kurzzeitige Schwankungen durch die damit verbundene Integration automatisch ausgeglichen werden. Es können aber auch andere Größen verwendet werden, wie bspw. das elektrische Moment des Generators oder das von dem Rotor auf den Generator, bzw. auf ein dazwischen geschaltetes Getriebe, gegebene mechanische Moment. Vorzugsweise ist das Effizienzmaßglied als Normierglied ausgeführt, das zum Normieren der Quantität auf die Windgeschwindigkeit ausgebildet ist. Das geschieht zweckmäßigerweise in der einfachsten Form dadurch, dass das Verhältnis der elektrischen Leistung zur dritten Potenz der Windgeschwindigkeit gebildet wird. Damit wird erreicht, dass Einflüsse auf Grund sich ändernder Windgeschwindigkeiten eliminiert werden können. Die Erfindung kann dadurch auch solche Fehler berücksichtigen, die durch Winddrehungen auf Grund eines auffrischenden Winds entstehen. Die Qualität der Azimutpositionierung verbessert sich damit beträchtlich.

Vorzugsweise ist ein Relevanzfilter vorgesehen. Es ist dazu ausgebildet, Werte außerhalb von einstellbaren Grenzwerten gar nicht oder nur in geringerem Umfang zu berücksichtigen. Zum Beispiel verwirft es Datensätze unterhalb einer Mindestleistung und/oder oberhalb einer Höchstgeschwindigkeit. Damit kann insbesondere eine Eingrenzung des Betriebsbereichs des erfindungsgemäßen Kalibriermoduls auf den Bereich der sogenannten optimalen Schnelllaufzahl durchgeführt werden. Der Bereich der optimalen Schnelllaufzahl betrifft die Windgeschwindigkeiten, bei denen die Drehzahl des Rotors proportional zur Windgeschwindigkeit gewählt ist. Das Verhältnis aus Blattspitzengeschwindigkeit und Windgeschwindigkeit ist die Schnelllaufzahl. Mit dem Relevanzfilter kann erreicht werden, einen Betrieb außerhalb der optimalen Schnelllaufzahl nicht zu berücksichtigen. Außerdem kann mit dem Relevanzfilter erreicht werden, dass Einflüsse durch außergewöhnliche Umstände nicht berücksichtigt werden, die ansonsten zu einer Verzerrung des Messergebnisses führen könnten.

Vorzugsweise weist das Effizienzmaßglied zusätzlich ein Streckenmodul des Rotor-/Generatorsystems auf. In dem Streckenmodul ist Systemkenntnis bezüglich des mechanischen und elektrischen Verhaltens des Rotor-/Generatorsystems bei der Umsetzung von mechanischer Windenergie in elektrische Energie als mathematisches Modell enthalten. Dabei werden insbesondere auch Einflussgrößen wie Trägheit des Rotor-/Generatorsystems berücksichtigt. Mit einem solchen Modell kann die Qualität des gebildeten Effizienzmaßes erhöht werden, da auch eine unter Einwirkung von Böen sich nur langsam ändernde Rotordrehzahl zutreffend erfasst werden kann. Das Modell kann an sich beliebig gestaltet sein. Es hat sich aber bewährt, es als Verzögerungsglied erster Ordnung auszubilden. Das ermöglicht mit verhältnismäßig geringem Aufwand eine gute Approximation des Systemverhaltens. Es kann auch vorgesehen sein, mit dem Streckenmodul das Systemverhalten bezüglich unterschiedlicher Wirkungsgrade der Windenergieanlage abzubilden. Beispielsweise ergeben sich in verschiedenen Betriebsbereichen der Windenergie anlage verschiedene Wirkungsgrade. Der Wirkungsgrad ist im Bereich der optimalen Schnelllaufdrehzahl höher als im Bereich der oberen Konstantdrehzahlregelung und auch wiederum anders als Wirkungsgrad im unteren Leistungsbereich. Mit einer solchen Ausbildung des Streckenmoduls kann eine Verfeinerung der Abbildung des Systemverhaltens erreicht werden.

Vorzugsweise ist das Berechnungsglied zur Berechnung eines gewichteten Mittelwerts ausgebildet. Unter einem gewichteten Mittelwert wird ein Mittelwert verstanden, bei dem die einzelnen Summanden mit unterschiedlichen Faktoren gewertet in die Rechnung einfließen. Die unterschiedlichen Faktoren können bspw. für eine Fensterfunktion im Zeitbereich stehen. Zweckmäßige Fensterformen sind z. B. ein Rech teckfenster oder ein Hammingfenster. Es können auch andere Fensterformen verwendet werden.

Vorzugsweise ist das Effizienzmaßglied selbst adaptierend ausgebildet. Damit ist es ermöglicht, das es sich selbständig an variierende standort- oder windbedingungsab hängige Faktoren anpasst. Das ist insbesondere dann von Vorteil, wenn bei Winden aus einer bestimmten Richtung Verzerrungen auftreten, die zu unrichtigen Messungen der Windrichtung durch die Windfahne führen, oder bei denen über die Rotorfläche hinweggesehen der Wind inhomogen ist. Weiter ist zweckmäßigerweise ein Korrekturmodul vorgesehen. Es ermöglicht eine Anpassung der Windenergieanlage insgesamt oder an verschiedene Komponenten davon. Beispielsweise kann eine Windenergieanlage mit verschiedenen Rotorblättern ausgerüstet werden, die sich in ihrer Blatttiefe unterscheiden. Davon wiederum ist es abhängig, wie sehr die Rotorblätter die Windmessung durch die Windfahne auf dem Maschinenhaus verfälschen. Entsprechende Korrekturwerte können in einem solchen Modul abgelegt werden, um sie je nach Bedarf abhängig von der tatsächlichen Ausrüstung der Windenergieanlagen abzurufen.

Es ist zweckmäßig, einen Speicher vorzusehen, in dem die gemessenen Windgeschwindigkeit, -richtung und Maße für die elektromechanische Quantität gespeichert sind. Er ist dazu ausgebildet, die gemessenen Daten einzeln oder zusammengefasst, z. B. als Mittelwert über einen bestimmten Zeitraum abzuspeichern. Der Speicher ist mit dem Effizienzmaßglied und den Berechnungsgliedern verbunden. Vorzugsweise ist der Speicher als ein Ringspeicher ausgeführt, der eine vorbestimmbare Anzahl von Datensätzen speichern kann. Damit wird erreicht, dass stets die gleiche Anzahl von in der Vergangenheit liegenden Datensätzen verfügbar ist, wobei zu alte Datensätze automatisch durch neue Datensätze überschrieben werden.

Vorzugsweise weist die Auswerteeinrichtung einen Schwellwertschalter auf. Bei Abweichungen unterhalb eines bestimmten Grenzwerts, z. B. 1%, wird kein Korrekturwert ausgegeben. Ist die Abweichung größer, so wird für je 1% Abweichung ein Korrekturwert für die Azimutposition von 1° ausgegeben. Der Zusammenhang zwischen der Größe der Abweichung und der Größe des Korrekturwerts ist vorzugsweise in einem Kennlinienglied eingespeichert.

Die Messeinrichtung kann so ausgebildet sein, dass sie die Windrichtung absolut oder relativ bestimmt. Unter absolut wird hier ein Wert verstanden, der auf ein erdfestes Koordinatensystem (bspw. rechtweisend Nord) bezogen ist. Unter relativ wird ein Koordinatensystem verstanden, das auf die Azimutposition des Maschinenhauses bezogen ist, wobei die Bezugslinie hier die Rotorachse ist. Die Messeinrichtung ist vorzugsweise auf dem Maschinenhaus angeordnet. Das hat den Vorteil einer kompakten und einfachen Anordnung in der Nähe des entsprechenden Rotors. Es soll aber nicht ausgeschlossen sein, dass die Messeinrichtung gesondert angeordnet ist, bspw. auf einem getrennt aufgestellten Messturm. Diese Variante bietet sich besonders dann an, wenn mehrere Windenergieanlagen von derselben Messeinrichtung mit Daten zu versorgen sind. Anstelle einer wie vorstehend beschriebenen direkten kann auch eine indirekte Windmessung vorgesehen sein. Beispielsweise können die Messeinrichtungen dazu ausgebildet sein, die Turmbiegung oder Rotorblattbiegemomente zu erfassen. Letzteres bietet den Vorteil, dass es anders als die vorstehend genannten Messmethoden, welche die Windstärke absolut (in Beaufort, Meter/Sekunde, Knoten etc.) messen, eine relative Messung ermöglicht. Relativ bedeutet, dass die Rotorblattbiegemomente besonders dann deutlich ansteigen, wenn das Maschinenhaus nicht korrekt zum Wind ausgerichtet ist. Das gilt in besonderem Maße für periodische Änderungen der Rotorblattbiegemomente.

Die Erfindung bezieht sich weiter auf ein Verfahren zum Ausrichten von Windenergieanlagen, die ein schwenkbar auf einem Unterbau angeordnetes Maschinenhaus mit einem Rotor an dessen Stirnseite aufweisen, mit den Schritten Messen von Windgeschwindigkeit, -richtung und einem Maß für eine elektromechanischen Quantität über der Windgeschwindigkeit, wobei das Effizienzmaß ein Indikator dafür ist, wie viel die Windenergieanlage bei den gegebenen Windbedingungen tatsächlich erzeugt, Klassifizieren nach positiver und negativer Windrichtung und Bilden eines ersten Mittelwerts aus den Effizienzmaßen, bei denen die Windrichtung positiv ist, Bilden eines zweiten Mittelwerts aus den Effizienzmaßen, bei denen die Windrichtung negativ ist, Bestimmen der Differenz von erstem und zweitem Mittelwert, Ausgeben eines Kalibrierwert entsprechend der Differenz an die Steuerung zum Schwenken des Maschinenhauses.

Zur Erläuterung wird auf vorstehende Ausführungen Bezug genommen.

Nachfolgend seien noch einige verwendete Begriffe erläutert:

Unter Datensatz wird ein zu einem bestimmten Zeitpunkt aufgenommene Gruppe von Parametern verstanden, die zumindest die Windgeschwindigkeit, die Windrichtung und die abgegebene elektrische Leistung umfasst.

Der Begriff Mittelwert ist im mathematischen Sinne weit zu verstehen. Er umfasst nicht nur das arithmetische Mittel, sondern auch andere Arten von gewichteten Mittelwerten oder auch andere Berechnungsweisen, wie bspw. das geometrische Mittel. Es versteht sich, dass die Erfindung nicht darauf beschränkt ist, nur genau einen Mittelwert für eine positive oder negative Windrichtung zu ermitteln. Es kann genauso gut vorgesehen sein, jeweils zwei oder mehr Mittelwerte zu berechnen. Weiter kann auch vorgesehen sein, einen Neutralbereich zu bilden, d. h. eine Windrichtung, die neutral ist oder nur um einen einstellbaren geringen Betrag positiv oder negativ ist.

Unter einer positiven Windrichtung wird eine solche Windrichtung verstanden, die entlang der Rotorachse vom Maschinenhaus zum Rotor gesehen rechts liegt. Dementsprechend wird unter einer negativen Windrichtung diejenige verstanden, die links der Rotorachse vom Maschinenhaus zum Rotor gesehen liegt.

Unter Azimut wird die Orientierung des Maschinenhauses mit seiner Rotorachse in einer horizontalen Ebene verstanden. Das Verfahren des Maschinenhauses in verschiedene Azimutpositionen wird als Schwenken bezeichnet.

Unter einer Schwenkeinrichtung wird eine Vorrichtung verstanden, welche zur Veränderung der Azimutposition des Maschinenhauses ausgebildet ist. Meist ist sie als ein aktiver Stellantrieb mit reversierbarem Antriebsmotor ausgeführt. Es ist aber auch möglich, sie passiv mit einer Blockiereinrichtung auszuführen; das Maschinenhaus wird durch die Kraft des Windes ausgerichtet und mittels der Blockiereinrichtung (Bremse) in der richtigen Azimutposition festgehalten. Diese Ausführung ist vor allem bei Leeläufern zweckmäßig.

Die Erfindung wird nachfolgend unter Bezugnahme auf die Zeichnung erläutert, in der ein vorteilhaftes Ausführungsbeispiel der Erfindung dargestellt ist. Es zeigen:
- Fig. 1: eine schematische Ansicht eines Ausführungsbeispiels für eine erfindungsgemäße Windenergieanlage;
- Fig. 2: eine Aufsicht auf die in Fig. 1 dargestellte Windenergieanlage;
- Fig. 3: eine schematische Ansicht einer gesonderten Steuerung mit Messeinrichtung gemäß einem zweiten Ausführungsbeispiel;
- Fig. 4: eine schematische Ansicht eines Blockschaltplans des in Fig. 1 dargestellten Ausführungsbeispiels;
- Fig. 5: Verläufe für Parametern des Datensatzes; und
- Fig. 6: von der Auswerteeinrichtung daraus berechnete Kurven.

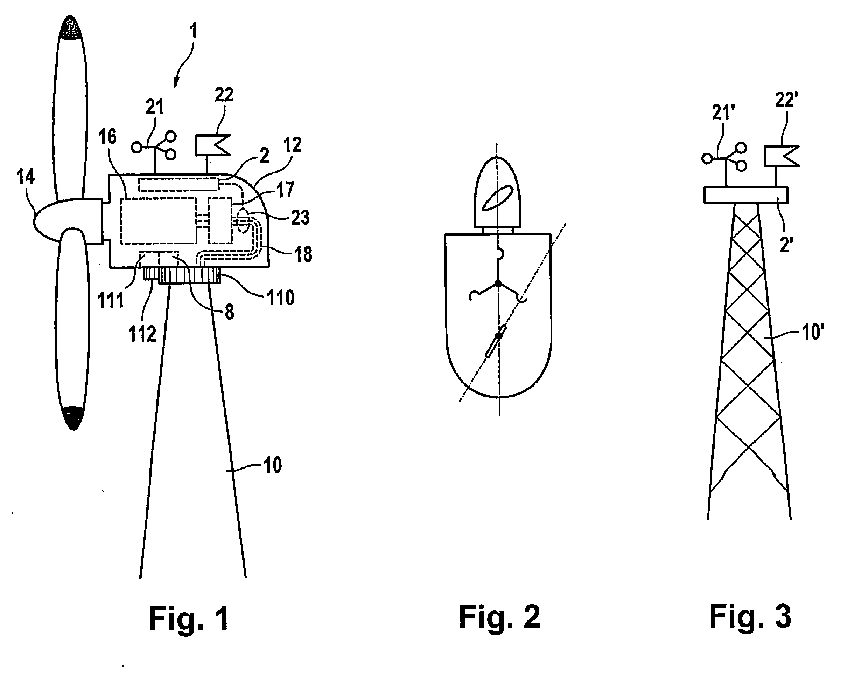

In Fig. 1 ist eine Windenergieanlage gemäß einem Ausführungsbeispiel der Erfindung dargestellt. Sie umfasst einen Turm als Unterbau 10, an dessen Spitze ein Maschinenhaus 12 schwenkbar angeordnet ist. An einer Stirnseite des Maschinenhauses 12 ist ein Rotor 14 mit mehreren Flügeln drehbar angeordnet. Er wirkt mittels einer nicht dargestellten Welle auf einen Generator 16 zur Erzeugung elektrischer Energie. Weiter ist ein Umrichter 17 und Leitungen 18 zum Weiterleiten der elektrischen Energie in den Turm 10 und von dort weiter zu den Abnehmern vorgesehen. Ferner ist in dem Maschinenhaus 12 eine Steuerung 8 für die Azimutverstellung des Maschinenhauses 12 angeordnet. Mit ihr wirken Sensoren 21, 22 für Windparameter (Windstärke und Windrichtung) sowie eine elektrische Leistungsmesseinrichtung 23 und eine Schwenkeinrichtung 11 als Aktuator zusammen.

Zuerst sei der mechanische Aufbau der Azimutverstellung erläutert. An dem oberen Ende des Turms 10 ist ein großer umlaufender Zahnkranz 110 angeordnet. In seine Außenverzahnung greift ein Ritzel 112 ein, das an der Unterseite des Maschinenhauses 12 angeordnet ist. Das Ritzel 112 ist angetrieben von einem Antriebsmotor 111 der Schwenkeinrichtung 11. Der Antriebsmotor 111 ist betätigt durch die Steuerung 8. Die Wirkungsweise ist wie folgt: Gibt die Steuerung 8 ein Signal zur Azimutverstellung, so wird der Antriebsmotor 111 der Schwenkeinrichtung 11 angesteuert. Dadurch wird das Zahnrad 112 in Drehung versetzt, das in der Umfangsverzahnung des feststehenden Zahnkranzes 110 abläuft. Dadurch wird das Maschinenhaus 12 mit dem Rotor 14 gegenüber dem Turm 10 in einer horizontalen Ebene geschwenkt. Die Drehrichtung des Antriebsmotors 111 ist dabei gemäß der gewünschten Schwenkrichtung des Maschinenhauses 12 gewählt.

Die Steuerung 8 ist dazu ausgebildet, selbsttätig aus gemessenen Windparametern Ausgangssignale für die Schwenkeinrichtung 11 zu ermitteln. Für die Messung der Windparameter sind die Sensoren 21 und 22 vorgesehen. Der Sensor 21 ist als ein an sich bekanntes Schalenkreuzanemeter ausgebildet und dient zur Bestimmung der Windstärke. Der Sensor 22 ist als eine an sich bekannte Windfahne ausgebildet und dient zur Ermittlung der Windrichtung. Die Sensoren 21, 22 sind über einen Analog-Digitalwandler 24, in einer später noch näher zu erläuternden Weise, mit der Steuerung 8 verbunden. Die Steuerung 8 ist als Nachführregler ausgebildet und wirkt auf die Schwenkeinrichtung 11 in der Weise ein, dass das Maschinenhaus 12 in die Windrichtung ausgerichtet wird.

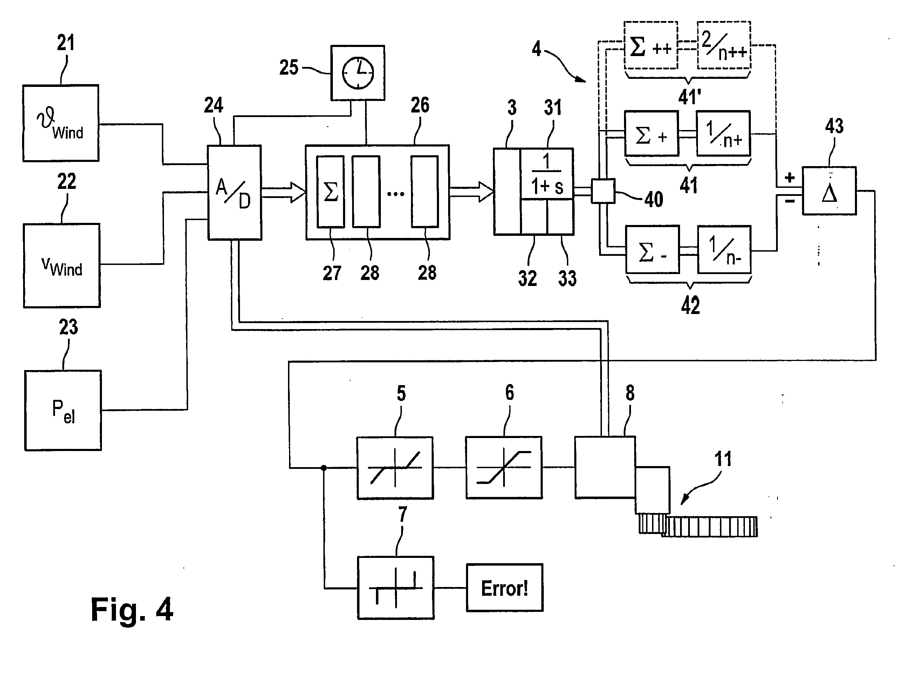

Weiter ist erfindungsgemäß ein Kalibriermodul 2 vorgesehen. Bevor es näher erläutert wird, wird noch einmal auf die Messeinrichtungen für die Windparameter eingegangen werden. Beide Sensoren 21, 22 sind oben auf dem Maschinenhaus 12 angeordnet. Sie befinden sich damit in Windrichtung gesehen hinter dem Rotor 14, sofern der Rotor 14 wie üblich als Luvläufer ausgeführt ist. Im Falle eines Leeläufers wären sie vor dem Rotor angeordnet. In beiden Fällen ist die Luftströmung im Bereich der Sensoren 21, 22 durch die Drehbewegung der Flügel des Rotors 14 beeinflusst. Weitere häufige Fehlerquellen sind Montageungenauigkeiten sowie Einflüsse durch externe Faktoren, bspw. durch eine benachbarte Windenergieanlage in einem Windpark, wodurch es ebenfalls zu Verwirbelungen und Strömungsveränderungen kommen kann. Um trotz der dadurch resultierenden ungünstigen Einflüsse eine möglichst genaue Ausrichtung des Maschinenhauses 12 und des Rotors 14 in Bezug auf den Wind zu erreichen, ist das Kalibriermodul 2 erfindungsgemäß ausgestaltet, wie nachfolgend näher unter Bezugnahme auf Fig. 4 beschrieben wird. Es ist anzumerken, dass das Kalibriermodul 8 nicht als körperlich gesonderte Einheit ausgeführt zu sein braucht, es kann auch in die Steuerung 2 integriert ausgeführt sein.

In Fig. 4 ist eine schematische Blockansicht der Steuerung 8 und des erfindungsgemäßen Kalibiermoduls 2 gegeben. Man erkennt im linken Bereich der Abbildung die Sensoren 21, 22 als Messeinrichtungen für Windparameter (Windrichtung ϑ und Windgeschwindigkeit v) und weiter einen Sensor 23 für die abgegebene elektrische Leistung (Pₑ₁). Bei der gemessenen elektrischen Leistung handelt es sich vorzugsweise um die Wirkleistung P, da sie besser als die Schein- oder Blindleistung ein Maß für die tatsächlich von der Windenergieanlage 1 erbrachte Leistung ist und damit besser für ein Effizienzmaß geeignet ist. Es kann aber auch vorgesehen sein, anstelle der Leistung die abgehende elektrische Energie zu verwenden. Dies hat den Vorteil, dass bei Messungen über einen längeren Zeitraum automatisch eine Integration durchgeführt wird. Zweckmäßigerweise kann dazu der ohnehin in einer Windenergienanlage vorhandene Zähler für die abgegebene Energie (Kilowattstundenzähler) herangezogen werden. Damit wird nicht nur ein gesonderter Sensor erspart, sondern es erfolgt auch noch automatisch eine Integration des Leistungssignals, wodurch sich unerwünschtes Rauschen im Messsignal verringert. Es können auch andere Parameter herangezogen werden, welche ein Maß für die von dem Rotor-/Generatorsystem erbrachte Arbeit bzw. Leistung sind. In Betracht kommen hier insbesondere das von dem Rotor abgegebene mechanische oder das vom Generator erzeugte elektrische Moment, welches je nach Betriebsbereich mit oder ohne Drehzahlbewertung herangezogen wird.

Die von Sensoren 21, 22, 23 gelieferten Signale werden zu bestimmten Zeitpunkten von einem Analog-Digitalwandler 24 abgetastet. Die Zeitpunkte der Abtastung werden bestimmt durch einen Zeitgeber 25, der mit dem A/D-Wandler 24 sowie einem optionalen Speicher 26 verbunden ist. Die von dem A/D-Wandler 24 erzeugten digitalen Daten der Sensoren 21, 22, 23 können nach einer optionalen Vorverarbeitung in einem Summierer 27 als Datensätze 28 in den Speicher 26 eingespeichert werden. Der Speicher 26 ist als Ringspeicher ausgebildet, der eine bestimmte Anzahl von Datensätzen einspeichert, und beim Hinzukommen von neuen Datensätzen entsprechend ältere Datensätze löscht. In dem dargestellten Ausführungsbeispiel ist der Speicher 26 so bemessen, dass er einhundert Datensätze 28 enthält. Sie umfassen beispielsweise jeweils ein Intervall von zehn Minuten. Es hat sich gezeigt, dass ein Intervall von zehn Minuten eine gute Qualität der gemessenen Werte ergibt. Diese Zeitdauer liegt unterhalb derjenigen von Wetteränderungen, bspw. durch Verlagerung oder Änderung von Hoch- oder Tiefdruckgebieten. Andererseits ist die Zeitdauer aber größer als diejenige schneller, dynamischer Wettereinflüsse, wie bspw. Böen, Thermikblasen oder Microbursts. Gemäß der Erfindung ist eine Abtastung in einem Intervall von etwa zehn Minuten daher optimal in dem Sinne, dass eine unerwünschte Beeinflussung durch schnelle dynamische wie auch auf Grund langfristiger Veränderungen minimiert ist.

Der A/D-Wandler 24 und der Speicher 26 brauchen nicht zwingend vorgesehen zu sein. Häufig stehen die benötigten Windparameter sowie das Maß für die elektromechanische Quantität ohnehin aus der Betriebssteueranlage der Windenergieanlage zur Verfügung, und zwar in vielen Fällen bereits als Mittelwert über zehn Minuten. Eine gesonderte Messung und Speicherung ist dann entbehrlich. Die Parameter können direkt weiterverarbeitet werden, wie nachfolgend näher beschrieben wird.

Für die weitere Verarbeitung sind ein Effizienzmaßglied 3 und eine Auswerteinrichtung 4 vorgesehen. Das Effizienzmaßglied 3 kann in Bezug auf den optionalen Speicher 26 so angeordnet sein, dass es wie in Fig. 4 dargestellt die Datensätze 28 erst beim Auslesen verarbeitet; es ist aber auch möglich, die Datensätze 28 vor dem Einspeichern in dem Speicher 26 mit dem Effizienzmaßglied 3 zu verarbeiten. Das Effizienzmaßglied 3 ist in dem dargestellten Ausführungsbeispiel als ein Normierungsglied ausgeführt. Es ist dazu ausgebildet, die gemessene elektrische Leistung Pₑ₁ durch die dritte Potenz der Windgeschwindigkeit v zu dividieren. Die Berechnung ergibt einen Koeffizienten für die Effizienz der Windenergieanlage 1 bei der gegebenen Azimutstellung und den gegebenen Windbedingungen. Ist der optionale Speicher 26 nicht vorhanden, ist zweckmäßigerweise das Effizienzmaßglied zur Verarbeitung der von der Windenergieanlage in einem bestimmten Zeitraum abgegebene elektrische Energie anstatt der elektrischen Leistung Pₑ₁ ausgebildet. Wie bereits weiter oben beschrieben, ermöglicht dies eine besonders rationelle Ausführung. Weiter ist optional ein Streckenmodell 31 vorgesehen. Es stellt eine mathematische Approximation des Rotor-/Generatorsystems 14, 16 und sein Verhalten bei verschiedenen Windbedingungen dar. Dadurch kann insbesondere der Einfluss von sich abrupt ändernder Windstärke, wie etwa beim Einfall von Windböen, und sich daraus ergebende Drehzahländerungen berücksichtigt werden. Dies ist insbesondere bei drehzahlvariablen Anlagen ein großer Vorteil, bei denen die Massenträgheit des Rotor-/Generatorsystems 14, 16 zur kurzfristigen Speicherung der Energie von Windböen verwendet wird. Weiter ist ein Relevanzfilter 32 vorgesehen. Es ist dazu ausgebildet, Werte außerhalb einstellbarer Grenzen für Windgeschwindigkeit oder elektrische Leistung zu rückzuweisen. Im dargestellten Ausführungsbeispiel ist der Relevanzfilter 32 so eingestellt, dass Datensätze mit Windgeschwindigkeiten über 10 m/s oder mit elektrischer Leistung von weniger als 40 kW (bezogen auf eine Nennleistung der Anlage von 1500 kW) verworfen werden. Die Grenzwerte sind zweckmäßigerweise so gewählt, dass nur solche Werte weiter verarbeitet werden, bei denen mittlere Windbedingungen herrschen. Anders ausgedrückt werden nur solche Werte weiter verarbeitet, bei denen die Windenergieanlage 1 im sogenannten λₒₚₜ-Betrieb gefahren wird, d. h. die Drehzahl des Rotors 14 ist so eingestellt, dass sich ein bestimmtes Verhältnis zwischen Blattspitzengeschwindigkeit und Windgeschwindigkeit ergibt.

Grundsätzlich kann die Erfindung auch in anderen Bereichen Anwendung finden, jedoch muss dann die Normierfunktion des Effizienzmaßglieds 3 und das Streckenmodell 31 gegebenenfalls angepasst bzw. erweitert werden. Zweckmäßigerweise ist zu diesem Zweck zusätzlich ein Korrekturglied 33 vorgesehen, welches Angaben über das Systemverhalten außerhalb des λₒₚₜ-Bereichs enthält. Weiterhin kann es Angaben über verschiedene Varianten von Windenergieanlagen enthalten, bei denen die erfindungsgemäße Vorrichtung vorgesehen ist. Diese Angaben umfassen wesentliche für den Betrieb des Rotor-/Generatorsystems bedeutende Parameter. Ein Beispiel dafür ist der Typ des verwendeten Rotorblatts. Es ist bekannt, dass schlanke oder tiefe Rotorblätter einen unterschiedlichen Drall im Lee erzeugen, wodurch unterschiedliche Ablenkungen der Windfahne induziert werden. Vorzugsweise ist vorgesehen, dass in dem Korrekturglied mehrere Sätze von Parametern verschiedene Typen von Windenergieanlagen, verschiedene Typen von Rotorblättern etc. abgespeichert sind, von denen ein geeigneter auswählbar ist. Das Korrekturglied 33 kann weiter vorzugsweise mit einem Adaptionsalgorithmus versehen sein. Der Adaptionsalgorithmus dient dazu, die Parameter oder in den anderen Komponenten des Effizienzmaßglieds verwendeten Größen, bspw. bei dem Streckenmodul 31, an veränderte Bedingungen anzupassen. Das kann dadurch geschehen, dass durch Vergleich mit externen Messeinrichtungen, bspw. des Windmastes 10', vom jeweiligen Standort der Windenergieanlage abhängige standortspezifische und/oder windrichtungsabhängige Faktoren ermittelt und kompensiert werden. Ist bspw. eine Windenergieanlage so angeordnet, dass sie bei einer bestimmten Windrichtung durch natürliche oder künstliche Strukturen schräg angeströmt wird, so kann mittels des Adaptionsalgorithmus die entsprechende Richtungsabweichung kompensiert werden. Das gilt insbesondere in solchen Fällen, wenn bei mehreren in einem Windpark angeordneten Windenergieanlagen bei bestimmten Windrichtungen gegenseitige Abschattungseffekte auftreten. Da die sich daraus ergebenden Beeinflussungen häufig nicht genau genug vorausberechnet werden können, hat ein selbstadaptierender Algorithmus den Vorzug, dass er sich selbsttätig an die jeweiligen Bedingungen anpasst. Das gilt insbesondere auch für solche in der Regel nur schwer oder nicht vorausberechenbare Fälle, bei denen eine inhomogene Verteilung der Windgeschwindigkeit oder -richtung über die Rotorfläche auftritt. Das ist insbesondere bei modernen und großen Windenergieanlagen mit Rotordurchmessern von über hundert Metern ein nicht selten zu beobachtendes Phänomen.

Es schließt sich dann eine Auswerteeinrichtung 4 an. Sie ist im Wesentlichen zweikanalig mit einem Klassifikator 40 an ihrem Eingang aufgebaut. Der Klassifikator 40 ist dazu ausgebildet, danach zu klassifizieren, ob bei den an seinem Eingang anliegenden Daten die Windrichtung positiv oder negativ ist und je nachdem an den ersten bzw. zweiten Ausgang weiterzuleiten. An dem ersten Ausgang ist ein erster Kanal, und an dem zweiten Ausgang ein zweiter Kanal angeschlossen. Der erste Kanal weist ein erstes Berechnungsglied 41 zum Bestimmen eines ersten Mittelwerts aus den Datensätzen 28 auf, bei denen die Windrichtung positiv ist. Unter positiv wird hierbei verstanden, dass die Richtung des Winds bezogen auf die Rotorachse vom Maschinenhaus 12 ausgesehen von rechts einfällt. Das erste Berechnungsglied 41 addiert die von dem Effizienzmaßglied 3 gebildeten Effizienzkoeffizienten auf und teilt die sich dabei ergebende Summe durch die Anzahl der aufaddierten Koeffizienten. Entsprechend ist das zweite Berechnungsglied 42 dazu ausgebildet, einen zweiten Mittelwert aus den Datensätzen zu bilden, bei denen die Windrichtung negativ ist. Die sich daraus ergebenden ersten und zweiten Mittelwerte werden dem Komparator 43 zugeführt. Der Komparator 43 berechnet die Differenz der beiden Werte. Es können auch mehr als zwei Kanäle vorgesehen sein. Beispielsweise kann noch jeweils ein zusätzlicher Kanal für große positive Abweichungen (Symbol ++) vorgesehen sein, die in Fig. 3 gestrichelt als 41 dargestellt ist; entsprechend kann symmetrisch auf der negativen Seite ein Kanal für große negative Abweichungen vorgesehen sein (nicht dargestellt). Weiter ist es möglich, einen Neutralkanal (nicht dargestellt) zwischen dem ersten Kanal und zweiten Kanal vorzusehen. Dieser ist dazu ausgebildet, Werte, bei denen die Windrichtung weder positiv noch negativ ist (ggf. mit einem einstellbaren Toleranzspektrum) zu verarbeiten. Der Komparator 43 kann die Berechnung des Differenzwerts laufend vornehmen, vorzugsweise ist er aber so ausgebildet, dass er dies in regelmäßigen Zeitabständen vornimmt oder wenn die Berechnungsglieder 41, 42 eine bestimmte Anzahl von Werten (z. B. 100) verarbeitet haben. Der Differenzwert ist an einen Schwellwertschalter 5 angelegt. Ist die Differenz der beiden Mittelwerte kleiner als 1%, dann ist die Azimutposition korrekt und es braucht nichts unternommen zu werden. Ist die Abweichung größer als 1%, dann wird der Wert an ein Kennlinienglied 6 angelegt. Dieses ermittelt aus dem Wert der Abweichung einen neuen Kalibrierwert für die Steuerung 8 anhand einer eingespeicherten Kennlinie. Mit diesem neuen Kalibrierwert wird die Steuerung 8 beaufschlagt und wirkt auf die Schwenkeinrichtung 11 so ein, dass die Azimutposition des Maschinenhauses 12 entsprechend nachgeführt wird. In dem dargestellten Ausführungsbeispiel ist das Kennlinienglied 6 so ausgebildet, dass sich für jedes Prozent Abweichung der Kalibrierwert um 1° geändert wird. Damit ist die Verstellung abgeschlossen, und der Zyklus beginnt unter Löschung der alten Werten von Neuem.

Außerdem ist noch ein Fehlermodul 7 vorgesehen. An seinem Eingang ist das von dem Komparator 43 bestimmte Differenzsignal angelegt. Das Fehlermodul 7 ist ebenfalls als Schwellwertschalter ausgebildet. Liegt das Differenzsignal über 10%, so wird eine Fehlermeldung ausgegeben und gegebenenfalls die Korrektur der Azimutposition abgeschaltet.

Eine weitere Ausführungsform ist in Fig. 3 dargestellt. Sie unterschiedet sich von der in Fig. 1 dargestellten Ausführungsform dadurch, dass die Steuerung 8' mit ihren Sensoren 21', 22' für die Windgeschwindigkeit und die Windrichtung nicht auf dem Maschinenhaus der Windenergieanlage 1, sondern auf einem gesonderten Turm 10' angeordnet ist. Eine solche Anordnung kann dann von Vorteil sein, wenn die Steuerung 8' auf mehrere Windenergieanlagen wirkt. Eine solche Ausführungsform kann sich insbesondere dann anbieten, wenn mehrere Windenergieanlagen an einem Standort aufgestellt sind, an dem verhältnismäßig gleichmäßige Windbedingungen herrschen, bspw. einem flachen Küstenabschnitt.

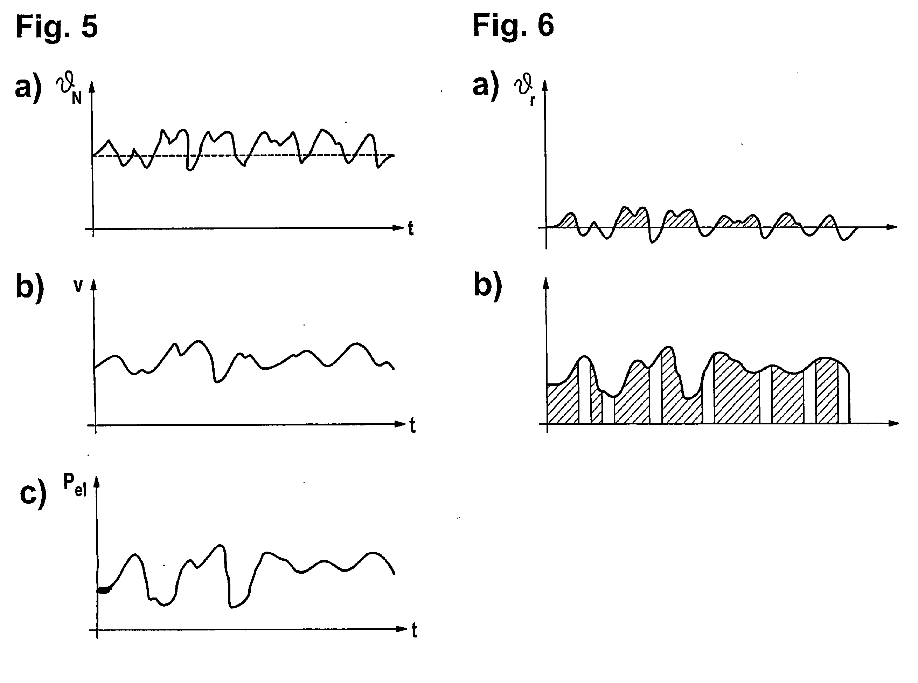

Die Wirkungsweise des Verfahrens ist in Fig. 5 und 6 dargestellt. In Fig. 5a ist die Windrichtung ϑ bezogen auf rechtweisend Nord über der Zeit dargestellt. Weiter ist dargestellt als gestrichelte Linie die Position des Masch i-nenhauses 12 in Bezug auf rechtweisend Nord. In Fig. 5b ist die gemessene Windgeschwindigkeit v in demselben Maßstab über der Zeit t dargestellt. In Fig. 5c schließlich ist die abgegebene elektrische Leistung Pₑ₁ ebenfalls über demselben Zeitmaßstab dargestellt. Diese Parameter werden durch den A/D-Wandler 24 abgetastet und die sich damit ergebenden Datensätze 28 in den Speicher 26 gespeichert. Bei der nachfolgenden Auswertung ergeben sich dann die in Fig. 6 dargestellten Kurven. In Fig. 6a ist die Windrichtung ϑᵣ bezogen auf die Position des Maschinenhauses 12 dargestellt. Positiv schraffiert sind die Bereiche, in denen die Windrichtung positiv ist. In Fig. 6b ist der von dem Effizienzmaßglied 3 berechnete Effizienzkoeffizient dargestellt. Schraffiert sind wieder all die Bereiche, bei denen die Windrichtung positiv ist. Durch die ersten und zweiten Berechnungsglieder 41, 42 werden nun die Werte all der Bereiche zusammenaddiert und daraus ein gegebenenfalls gewichteter Mittelwert gebildet, bei denen die Windrichtung positiv (schraffiert) bzw. negativ (nicht schraffiert) ist. Es ist anzumerken, dass die Mittelwertbildung auch fortlaufend erfolgen kann, so dass ein Speicher 26 nicht unbedingt erforderlich ist. Wie man bereits aus der Darstellung in Fig. 6b erkennen kann, überwiegen die schraffierten Anteile. Das bedeutet, dass der Mittelwert der positiven Windrichtung größer ist als derjenige der negativen Windrichtung, es ergibt sich also ein entsprechender Differenzwert. Das bedeutet weiter, dass das Maschinenhaus 12 in Richtung zur positiven Windrichtung gedreht werden muss, um eine optimale Position zum Wind zu erhalten. Dementsprechend wird über den Schwellwertschalter 5 und das Kennlinienglied 6 die Steuerung 8 mit einem Kalibierwert beaufschlagt. Diese steuert dann die Schwenkeinrichtung 11 an.

## Patentansprüche

1. Windenergieanlage mit einem Unterbau (10), einem darauf angeordneten Maschinenhaus (12), das mittels einer Schwenkeinrichtung (11) azimutverstellbar ist, einem Rotor (14), der drehbar an einer Stirnseite des Maschinenhauses (12) angeordnet ist und einen Generator (16) zur Erzeugung elektrischer Energie antreibt, Messeinrichtungen (21, 22, 23) zur Messung von Windgeschwindigkeit, -richtung sowie für eine elektromechanische Quantität und einer Steuerung (8) für die Schwenkeinrichtung (11),
**dadurch gekennzeichnet, dass**
ein Kalibriermodul (2) für die Steuerung (8) vorgesehen ist, das ein Effizienzmaßglied (3) und eine Auswerteeinrichtung (4) umfasst,
wobei das Effizienzmaßglied (3) zum Berechnen eines Effizienzmaßes für die Erzeugung der elektromechanischen Quantität über der Windgeschwindigkeit ausgebildet ist, wobei das Effizienzmaß ein Indikator dafür ist, wie viel die Windenergieanlage (1) bei den gegebenen Windbedingungen tatsächlich erzeugt, und
wobei die Auswerteeinrichtung (4) einen Klassifikator (40) mit einem ersten Ausgang für eine erste Klasse mit positiver Windrichtung und einen zweiten Ausgang für eine zweite Klasse mit negativer Windrichtung aufweist, an die ein erstes Berechnungsglied (41) zum Bestimmen eines ersten Mittelwerts aus den Effizienzmaßen der ersten Klasse und ein zweites Berechnungsglied (42) zum Bestimmen eines zweiten Mittelwerts aus den Effizienzmaßen der zweiten Klasse angeschlossen sind, und ein Komparatorglied (43) aufweist, das zum Bestimmen einer Differenz von den Mittelwerten der ersten und zweiten Klassen und Ausgeben eines Kalibrierwerts entsprechend der Differenz an die Steuerung (8) der Schwenkeinrichtung (11) ausgebildet ist.

2. Windenergieanlage nach Anspruch 1,
**dadurch gekennzeichnet, dass**
die Quantität elektrische Energie ist.

3. Windenergieanlage nach Anspruch 1,
**dadurch gekennzeichnet, dass**
die Quantität die elektrische Leistung ist.

4. Windenergieanlage nach Anspruch 1,
**dadurch gekennzeichnet, dass**
die Quantität das mechanische oder elektrische Moment ist.

5. Windenergieanlage nach einem der Ansprüche 1 bis 4,
**dadurch gekennzeichnet, dass**
das Effizienzmaßglied (3) ein Normierglied ist, das zur Normierung der Quantität auf die Windgeschwindigkeit ausgebildet ist.

6. Windenergieanlage nach Anspruch 5,
**dadurch gekennzeichnet, dass**
das Normierglied ein Potenzierungsmodul aufweist, das vorzugsweise die dritte Potenz der Windgeschwindigkeit berechnet.

7. Windenergienanlage nach einem der Ansprüche 1 bis 6,
**dadurch gekennzeichnet, dass**
das Effizienzmaßglied (3) ein Streckenmodell des Rotor-/Generatorsystems (14, 18) aufweist.

8. Windenergieanlagen nach Anspruch 7,
**dadurch gekennzeichnet, dass**
das Streckmodell ein Verzögerungsglied erster Ordnung aufweist.

9. Windenergieanlage nach einem der Ansprüche 1 bis 8,
**dadurch gekennzeichnet, dass**
die Berechnungsglieder (41, 42) zur Berechnung eines gewichteten Mittelwerts ausgebildet sind.

10. Windenergieanlage nach einem der Ansprüche 1 bis 9,
**dadurch gekennzeichnet, dass**
ein Speicher (26) vorgesehen ist, in dem Datensätze (28) mit der gemessenen Windgeschwindigkeit, -richtung und dem Maß für die elektromechanische Quantität eingespeichert sind, und das Effizienzmaßglied (3) zum Abrufen der Datensätze (28) ausgebildet ist.

11. Windenergieanlage nach einem der Ansprüche 1 bis 10,
**dadurch gekennzeichnet, dass**
der Speicher (26) als Ringspeicher in einer vorbestimmbaren Anzahl von Speicherdatensätzen (28) ausgeführt ist.

12. Windenergieanlage nach einem der Ansprüche 1 bis 11,
**dadurch gekennzeichnet, dass**
mindestens eine weitere Klasse für positive oder negative Windrichtung und/oder eine Neutralklasse für mittige Windrichtung vorgesehen sind.

13. Windenergieanlage nach einem der Ansprüche 1 bis 12,
**dadurch gekennzeichnet, dass**
das Effizienzmaßglied (3) selbstadaptierend ausgebildet ist.

14. Windenergieanlage nach einem der Ansprüche 1 bis 13,
**dadurch gekennzeichnet, dass**
ein Korrekturmodul zur Anpassung an verschiedene Windenergieanlagen und/oder deren Komponenten vorgesehen ist.

15. Windenergieanlage nach einem der Ansprüche 1 bis 14,
**dadurch gekennzeichnet, dass**
die Messeinrichtung (21, 22) für die Windparameter gesondert von der Windenergieanlage (1) angeordnet sind.

16. Windenergieanlage nach einem der Ansprüche 1 bis 15
**dadurch gekennzeichnet, dass**
ein Relevanzfilter (32) vorgesehen ist, das dazu ausgebildet ist, Werte außerhalb von einstellbaren Grenzwerten gar nicht oder nur in verringertem Umfang zu berücksichtigen.

17. Verfahren zum Ausrichten von Windenergieanlagen (1), die ein schwenkbar auf einem Unterbau (10) angeordnetes Maschinenhaus (12) mit einem Rotor (14) an dessen Stirnseite aufweisen, mit den Schritten:
Messen (28) von Windgeschwindigkeit, -richtung und einem Maß für eine elektromechanische Quantität,
Bilden eines Effizienzmaßes (3) der Quantität über der Windgeschwindigkeit, wobei das Effizienzmaß (3) ein Indikator dafür ist, wie viel die Windenergieanlage (1) bei den gegebenen Windbedingungen tatsächlich erzeugt,
Klassifizieren nach positiver und negativer Windrichtung und Bilden eines ersten Mittelwerts (41) aus den Effizienzmaßen (28), bei denen die Windrichtung positiv ist, sowie
Bilden eines zweiten Mittelwerts (42) aus den Effizienzmaßen (28), bei denen die Windrichtung negativ ist,
Bestimmen der Differenz (43) von erstem und zweitem Mittelwert (41, 42), und
Ausgeben eines Kalibrierwerts entsprechend der Differenz an die Steuerung (8) zum Schwenken des Maschinenhauses (12).

18. Verfahren nach Anspruch 17,
**gekennzeichnet durch**
Betreiben einer Windenergieanlage gemäß einem der Ansprüche 1 bis 16.

## Claims

1. A wind turbine with a substructure (10), a nacelle (12) arranged thereon, which is azimuth-adjustable by means of a pivot means (11), a rotor (14), which is arranged rotatably at one end of the nacelle (12) and drives a generator (16) for generating electrical energy, measuring means (21, 22, 23) for measuring wind speed, direction and for an electromechanical quantity, and a controller (8) for the pivot means (11),
**characterised in that**
a calibration module (2) is provided for the controller (8), which module comprises an efficiency measuring element (3) and an evaluator (4),
the efficiency measuring element (3) being designed to calculate an efficiency metric for generation of the electromechanical quantity over wind speed, the efficiency metric being an indicator for how much the wind turbine (1) actually generates under the given wind conditions, and
the evaluator (4) comprising a classifier (40) with a first output for a first class with positive wind direction and a second output for a second class with negative wind direction, to which a first calculation element (41) is connected for determining a first mean from the first class efficiency metrics and a second calculation element (42) for determining a second mean from the second class efficiency metrics, and comprising a comparator element (43), which is designed to determine a difference between the first and second class means and to output a calibration value corresponding to the difference to the controller (8) of the pivot means (11).

2. A wind turbine according to claim 1, **characterised in that** the quantity is electrical energy.

3. A wind turbine according to claim 1, **characterised in that** the quantity is the electrical power.

4. A wind turbine according to claim 1, **characterised in that** the quantity is the mechanical or electrical torque.

5. A wind turbine according to any one of claims 1 to 4, **characterised in that** the efficiency measuring element (3) is a scaling element, which is designed to scale the quantity to the wind speed.

6. A wind turbine according to claim 5, **characterised in that** the scaling element comprises an exponentiation module, which preferably calculates the third power of the wind speed.

7. A wind turbine according to any one of claims 1 to 6, **characterised in that** the efficiency measuring element (3) comprises a plant model of the rotor/generator system (14, 18).

8. A wind turbine according to claim 7, **characterised in that** the plant model comprises a first order delay element.

9. A wind turbine according to any one of claims 1 to 8, **characterised in that** the calculation elements (41, 42) are designed to calculate a weighted mean.

10. A wind turbine according to any one of claims 1 to 9, **characterised in that** a memory means (26) is provided, in which data records (28) comprising the measured wind speed and direction and the measure for the electromechanical quantity are stored, and the efficiency measuring element (3) is designed to retrieve the data records (28).

11. A wind turbine according to any one of claims 1 to 10, **characterised in that** the memory means (26) takes the form of a circular buffer in a predeterminable number of memory data records (28).

12. A wind turbine according to any one of claims 1 to 11, **characterised in that** at least one further class is provided for positive or negative wind direction and/or a neutral class for centred wind direction.

13. A wind turbine according to any one of claims 1 to 12, **characterised in that** the efficiency measuring element (3) is of auto-adapting construction.

14. A wind turbine according to any one of claims 1 to 13, **characterised in that** a correction module is provided for adaptation to various wind turbines and/or components thereof.

15. A wind turbine according to any one of claims 1 to 14, **characterised in that** the measuring means (21, 22) for the wind parameters are arranged separately from the wind turbine (1).

16. A wind turbine according to any one of claims 1 to 15, **characterised in that** a relevance filter (32) is provided, which is designed not to take any account of values outside adjustable limit values or to do so only to a reduced degree.

17. A method of orienting wind turbines (1), which comprise a nacelle (12) arranged pivotably on a substructure (10) and with a rotor (14) at the end thereof, having the steps:
measuring (28) wind speed, direction and a measure for an electromechanical quantity,
forming an efficiency metric (3) comprising quantity over wind speed, the efficiency metric (3) being an indicator for how much the wind turbine (1) actually generates under the given wind conditions,
classifying by positive and negative wind direction and forming a first mean (41) from the efficiency metrics (28) in which the wind direction is positive, and
forming a second mean (42) from the efficiency metrics (28) in which the wind direction is negative,
determining the difference (43) between the first and second means (41, 42), and
outputting a calibration value corresponding to the difference to the controller (8) to pivot the nacelle (12).

18. A method according to claim 17, **characterised by** operating a wind turbine according to any one of claims 1 to 16.

## Revendications

1. Eolienne avec une sous-structure (10), une salle de turbines (12) disposée dessus qui peut être réglée en azimut à l'aide d'un dispositif de pivotement (11), un rotor (14) qui est disposé de manière à pouvoir tourner sur un côté frontal de la salle de turbines (12) et entraîne un générateur (16) de génération d'énergie électrique, des dispositifs de mesure (21, 22, 23) pour la mesure de la vitesse et du sens du vent ainsi que pour une quantité électromécanique, et une commande (8) du dispositif de pivotement (11),
**caractérisée en ce**
**qu'**est prévu un module de calibrage (2) pour la commande (8), lequel comporte un organe de degré d'efficacité (3) et un dispositif d'évaluation (4),
sachant que l'organe de degré d'efficacité (3) est réalisé pour le calcul d'un degré d'efficacité de génération de la quantité électromécanique par rapport à la vitesse du vent, sachant que le degré d'efficacité est un indicateur de ce que génère réellement l'éolienne (1) dans des conditions de vent données, et
sachant que le dispositif d'évaluation (4) présente un classificateur (40) avec une première sortie pour une première classe avec un sens de vent positif et une seconde sortie pour une seconde classe avec un sens de vent négatif, auxquelles sont raccordés un premier organe de calcul (41) pour déterminer une première valeur moyenne à partir des degrés d'efficacité de la première classe et un second organe de calcul (42) pour déterminer une seconde valeur moyenne à partir des degrés d'efficacité de la seconde classe, et présente un organe de comparaison (43) qui est réalisé pour déterminer une différence entre les valeurs moyennes des première et seconde classes et transmettre une valeur, de calibrage correspondant à la différence, à la commande (8) du dispositif de pivotement (11).

2. Eolienne selon la revendication 1,
**caractérisée en ce que**
la quantité est de l'énergie électrique.

3. Eolienne selon la revendication 1,
**caractérisée en ce que**
la quantité est la puissance électrique.

4. Eolienne selon la revendication 1,
**caractérisée en ce que**
la quantité est le couple mécanique ou électrique.

5. Eolienne selon l'une quelconque des revendications 1 à 4,
**caractérisée en ce que**
l'organe de degré d'efficacité (3) est un organe de normalisation agencé pour normaliser la quantité sur la vitesse du vent.

6. Eolienne selon la revendication 5,
**caractérisée en ce que**
l'organe de normalisation présente un module de potentialisation qui calcule de préférence la puissance trois de la vitesse du vent.

7. Eolienne selon l'une quelconque des revendications 1 à 6,
**caractérisée en ce que**
l'organe de degré d'efficacité (3) présente un modèle d'allongement du système de rotor et générateur (14, 18).

8. Eolienne selon la revendication 7,
**caractérisée en ce que**
le modèle d'allongement présente un temporisateur de premier ordre.

9. Eolienne selon l'une quelconque des revendications 1 à 8,
**caractérisée en ce que**
les organes de calcul (41, 42) sont réalisés pour le calcul d'une valeur moyenne pondérée.

10. Eolienne selon l'une quelconque des revendications 1 à 9,
**caractérisée en ce**
**qu'**est prévu une mémoire (26) dans laquelle sont enregistrés des ensembles de données (28) avec la vitesse, le sens du vent mesurés et le degré pour la quantité électromécanique, et l'organe de degré d'efficacité (3) est agencé pour extraire les ensembles de données (28).

11. Eolienne selon l'une quelconque des revendications 1 à 10,
**caractérisée en ce que**
la mémoire (26) est réalisée comme un mémoire circulaire dans un nombre pouvant être prédéfini d'ensembles de données de mémoire (28).

12. Eolienne selon l'une quelconque des revendications 1 à 11,
**caractérisée en ce**
**qu'**au moins une autre classe pour le sens du vent positif ou négatif et/ou une classe neutre pour le sens du vent médian sont prévues.

13. Eolienne selon l'une quelconque des revendications 1 à 12,
**caractérisée en ce que**
l'organe de degré d'efficacité (3) est réalisé de manière autoadaptative.

14. Eolienne selon l'une quelconque des revendications 1 à 13,
**caractérisée en ce**
**qu'**est prévu un module de correction pour l'adaptation à différentes éoliennes et/ou leurs composants.

15. Eolienne selon l'une quelconque des revendications 1 à 14,
**caractérisée en ce que**
le dispositif de mesure (21, 22) pour les paramètres de vent est disposé séparément de l'éolienne (1).

16. Eolienne selon l'une quelconque des revendications 1 à 15,
**caractérisée en ce**
**qu'**est prévu un filtre de pertinence (32) qui est agencé pour ne pas tenir compte, du tout ou seulement dans une étendue moindre, des valeurs en dehors des valeurs limites réglables.

17. Procédé d'orientation d'éoliennes (1) qui présentent une salle de turbines (12) disposée pivotante sur une sous-structure (10) avec un rotor (14) sur son côté frontal, comportant les étapes suivantes :
mesurer (28) la vitesse, le sens du vent et un degré pour une quantité électromagnétique,
former un degré d'efficacité (3) de la quantité par rapport à la vitesse du vent, sachant que le degré d'efficacité (3) est un indicateur de ce que génère réellement l'éolienne (1) dans des conditions de vent données,
classifier selon le sens du vent positif et négatif et former une première valeur moyenne (41) à partir des degrés d'efficacité (28) pour lesquels le sens du vent est positif, ainsi que
former une seconde valeur moyenne (42) à partir des degrés d'efficacité (28) pour lesquels le sens du vent est négatif,
déterminer la différence (43) entre les première et seconde valeurs moyennes (41, 42), et
transmettre une valeur de calibrage, correspondant à la différence, à la commande (8) de pivotement de la salle de turbines (12).

18. Procédé selon la revendication 17,
**caractérisé par**
l'étape consistant à exploiter une éolienne selon l'une quelconque des revendications 1 à 16.
